# EUROPEAN PATENT APPLICATION

(11) **EP 2 017 862 A1**
(43) Date of publication of application: **21.01.2009**
(21) Application number: 08158988.9
(22) Date of filing: 25.06.2008
(51) Int. Cl.: H01G 9/10, H01G 9/155

(54) **Electric double layer capacitor**

(30) Priority: 20.07.2007 JP 2007189358
(71) Applicant: Nisshinbo Industries, Inc., Nihonbashi Chuo-ku Tokyo 103-8650 (JP)
(72) Inventor: Higashi, Yoji, Chiba-shi, Chiba 267-0056 (JP); Yasuda, Kosuke, Chiba-shi, Chiba 267-0056 (JP)
(74) Representative: Skuhra, Udo

(57) **Abstract**

An electric double layer capacitor with shorter electrodes that can secure insulation within a container is provided.
The electric double layer capacitor 30 of the present invention includes: a stack 15 including a plurality of thin positive electrode plates and thin negative electrode plates; an insulating pouch 31 storing the stack 15; a positive lead plate 11A in which lead terminals of the positive electrode plates are collected; a negative lead plate 12A in which lead terminals of the negative electrode plates are collected; a container 28 storing the pouch 31 in which the stack is stored; a sealing cap 21 sealing an opening of the container; electrode terminals 23 and 24 passing through the sealing cap 21 and fixed; and an insulating film 26 attached to the container 28 of the sealing cap 21. The electrode terminals 23 and 24 and the lead plates are connected, the insulating film 26 is adhered to the pouch 31 in a fluid-tight and air-tight state, the pouch 31 is stored in the container 28, and the opening of the container is sealed with the sealing cap 21.

## Description

### BACKGROUND OF THE INVENTION

### FIELD OF THE INVENTION

The present invention relates to an electric double layer capacitor. In particular, it relates to an electric double layer capacitor with shorter electrodes that can secure insulation within a container.

### DESCRIPTION OF THE RELATED ART

A conventional electric double layer capacitor as disclosed in Patent Document 1 (Japanese Unexamined Patent Application Publication No. 2001-110692) is well known. This electric double layer capacitor is manufactured in the following manner.

A stack is fabricated by stacking positive electrode plates and negative electrode plates, and an insulating separator therebetween in units of a predetermined number of multiple plates. Each electrode plate has a lead terminal, where positive lead terminals of this stack are collected as a single positive lead plate, and negative lead terminals are collected as a single negative lead plate.

The stack fabricated as such is put into a pouch-shaped insulator, impurities are removed, an electrolytic solution is injected into the insulator, and insulator and all are stored in a metal case. A lead plate is constituted by stacked multiple lead terminals, and is conductively connected. This lead plate is bent so as to meander, the tip thereof is made almost horizontal, a screw is provided perpendicular to this horizontal part, and the lead plate is then stored in a metal case.

Moisture included in the air may enter the electrolytic solution even though incorporation of moisture must be prevented to the utmost. Therefore, a cap is placed on the aperture of the metal case, and a semi-molten resin sealant is further injected and hardened thereupon. The lead plate has the aforementioned screw part passing through the cap and the resin sealant and projecting to the outside, and an electrical terminal is screwed to this screw.

In this conventional example, a cap is placed and further sealed with molten resin in the above manner so as to seal the aperture of the insulator.

However, the resin used as the sealant also is slightly moisture permeation, and moisture in the air may penetrate therein. Therefore, the thickness of the resin seal layer is made thick so as to secure the necessary fluid-tightness.

Generally, the electric double layer capacitor increases in resistance against emission of charged electricity and decreases in performance as the length of the electrodes constituted by a lead terminal, lead plate, and electrodes is longer.

Since the lead terminal is bent and made to meander in the aforementioned Patent Document 1, it becomes long and exhibits greater loss due to resistance. Bending the lead terminal so as to meander is for facilitating operations such as attaching a screw. However, even if the lead terminal is straightened without bending, the seal layer needs to have a substantial thickness in order to secure fluid-tightness, and thus there is a problem that the length of the lead terminal cannot be short.

In addition, Patent Document 2 (Japanese Unexamined Patent Application Publication No. 2004-304010) shows another conventional example. A capacitor body is fabricated by impregnating a flat aluminum electrolytic capacitor device with an electrolytic solution, putting it in a flexible storage case, pulling out the external pull-out terminal of a flat aluminum plate, and fusing the opening of the storage case to seal it. A lead terminal united with a sealing cap is joined to the external pull-out terminal of the capacitor body through laser welding or the like. Moreover, the capacitor body to which the lead terminal is joined is inserted in an external case with a flat rectangular cross section, and a sealing cap is welded to the opening of the external case, resulting in a flat aluminum electrolytic capacitor with an external case.

While this is excellent in sealing of the electrolytic solution, the length of the electrode, which is the sum of lengths of the pull-out terminal and the lead terminal, cannot be shortened, and thus there is a problem of exhibiting greater loss due to electrical resistance thereof.

### SUMMARY OF THE INVENTION

An objective of the present invention is to resolve the aforementioned problems of the conventional technology. Another objective of the present invention is to provide an electric double layer capacitor with a shorter electrode.

In order to reach the above-given objectives, an electric double layer capacitor of the present invention includes: a stack including a stacked plurality of thin positive electrode plates, plurality of thin negative electrode plates facing the thin positive electrode plates, and thin platy insulating members, each inserted between each electrode plate; an insulating pouch having an aperture on one end for storing the stack; a positive lead plate in which lead terminals of the positive electrode plates are collected; a negative lead plate in which lead terminals of the negative electrode plates are collected; a container storing the pouch in which the stack is stored; a sealing cap sealing an opening of the container; electrode terminals passing through the sealing cap and fixed in a fluid-tight state; and an insulating film attached to a side opposing the container of the sealing cap. The electrode terminals and the lead plates are conductively connected, the insulating film is adhered to the flexible pouch in a fluid-tight state, the pouch is stored in the container, and the opening of the container is sealed with the sealing cap.

It may employ a structure in which both the sealing cap and the container are made of metal, and the sealing cap is welded to the opening of the container so as to seal, a structure in which the flexible container and the insulating film are made of a material that can be heat sealed, or a structure in which electrode terminals are passed through the sealing cap and fixed by insulating gaskets, and the gaskets and the insulating film are adhered in a fluid-tight state.

A stack is fabricated on one side by stacking a positive electrode plate and a negative electrode plate via an insulating member, collecting lead terminals of positive electrode plates into a positive lead plate and collecting lead terminals of negative electrode plates into a negative lead plate while electrode terminals and an insulating film are integrated in a sealing cap on the other side. The stack is inserted in an insulating pouch, the lead plates of the stack are made to protrude from the pouch, and the electrode terminals of the sealing cap are brought close to the lead plates and connected through welding or the like. After connection is established, the edges of the pouch and the edge of the insulating film are adhered fluid-tight and air-tight, the stack and the pouch are inserted into the container, which is then sealed by the sealing cap.

As a result, insulation within the container may be secured since the electrode stack is sealed with the pouch in the container. Moreover, since both of the electrode terminals and the lead plates may be connected while all are exposed, operations are easily performed. Furthermore, since shorter electrode terminals and lead plates may be provided, electrical resistance can be reduced.

### BRIEF DESCRIPTION OF DRAWINGS

FIG. 1 is an exploded perspective view of a stack;
FIG. 2 is a perspective view of the stack;
FIG. 3 is a perspective view of a sealing cap assembly constituting an electric double layer capacitor;
FIG. 4 is a longitudinal sectional view showing a disassembled state of the electric double layer capacitor;
FIG. 5 is a longitudinal sectional view showing connection of the sealing cap and the stack contained in a pouch; and
FIG. 6 is a longitudinal sectional view of the electric double layer capacitor of the present invention.

### DETAILED DESCRIPTION OF THE PREFERRED EMBODIMENT

Embodiments according to the present invention are described forthwith with reference to attached drawings.

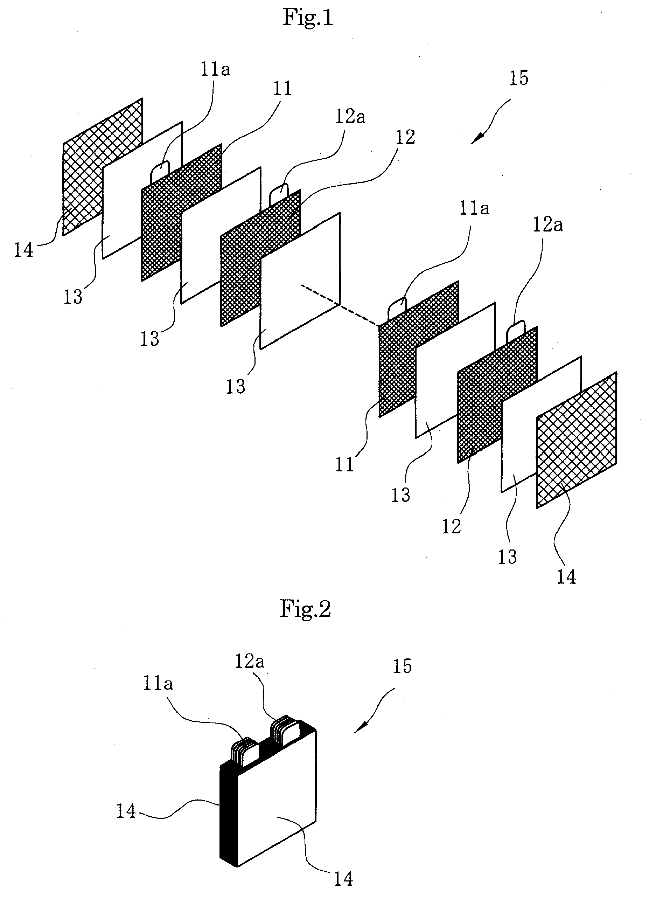

FIG. 1 is an exploded perspective view of a stack 15, and FIG. 2 is a perspective view of the stack 15. As shown in FIGS. 1 and 2, the electric double layer capacitor of the present invention includes the stack 15 formed by stacking positive electrode plates 11 and negative electrode plates 12 alternately via insulating members 13, and sandwiched by insulating sheets 14 at either end. Positive lead terminals 11a of the stack 15 are collected into one terminal, and negative lead terminals 12a are also collected into one terminal.

The positive electrode plates 11 and the negative electrode plates 12 have the same structure fabricated by applying and drying a slurry on one side or both sides of parts other than lead terminals or electrodes 11a and 12a, where the slurry is made by mixing activated carbon, a conducting agent, a binder, a solvent, or the like together in a current collector made of 15 to 100 µm-thick aluminum foil. The positive electrode plates 11 and the negative electrode plates 12 have the same structure fabricated by applying a slurry on one side or both sides of a current collector except for lead terminals 11a and 12a and then drying the slurry; where the current collector is made of 15 to 100 µm-thick aluminum foil and the slurry is made by mixing together activated carbon, a conducting agent, a binder, a solvent, or the like. The positive electrode plate 11 and the negative electrode plate 12 are arranged alternately and almost vertically, each stacked in plurality in a horizontal direction. The insulating member 13 is a nonwoven fabric or porous film made of an insulating material such as paper, polypropylene, polythene, polyamide-imide, polyester, polyvinylidene fluoride, polytetrafluoroethylene, or fiberglass, and insulates so that the respective electrode plates 11 and 12 do not directly touch each other.

The insulating sheets 14 sandwiching the stacked positive electrode plates 11, the negative electrode plates 12, and the insulating members 13 on either side of the stack 15 may be omitted.

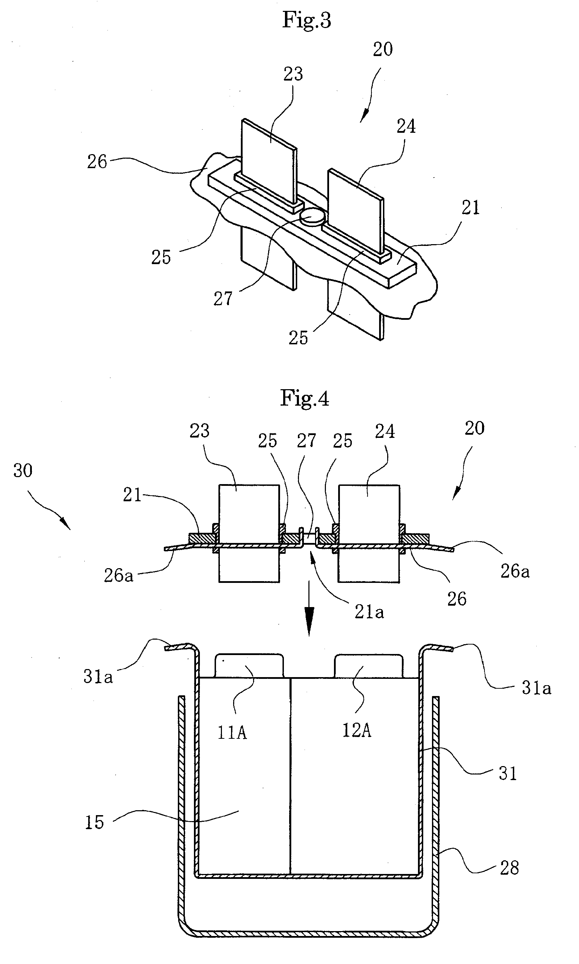

FIG. 3 is a perspective view of a sealing cap assembly 20 constituting an electric double layer capacitor 30 while FIG. 4 is a longitudinal sectional view showing a disassembled state of the electric double layer capacitor 30.

The stack 15 shown in FIG. 2, as shown in FIG. 4, has the multiple positive lead terminals 11a collected as a positive lead plate 11A, and the multiple negative lead terminals 12a collected as a negative lead plate 12A. The stack 15 fabricated as such is then inserted in a pouch 31. A film constituting the pouch 31 may be any material as long as it is fluid-tight for the electrolytic solution, electrically insulating, and may be heat sealed. For example, a 10 to 200µm-thick polypropylene film or polyethylene terephthalate film, or a stacked film thereof may be used.

A sealing cap 21 is an oblong metal plate with long narrow through-holes on either end of the center thereof, where electrode terminals 23 and 24 pass through these holes, and the periphery is connected fluid-tight and air-tight by gaskets 25. The gaskets 25 are made of an electrical insulating material, and are insert-molded to have a fluid-tight and air-tight structure. An insulating film 26 made of the same material as the pouch 31 is attached to the under surface of the sealing cap 21 in the drawing. A hole is formed in the insulating film 26, which is in contact with an aperture 21a passing through the center of the sealing cap 21, and the insulating film 26 is unified with the same material of the pouch 31 adhered to the entire inner circumference of the aperture 21a. The insulating film 26 has electrode terminals 23 and 24 passing therethrough and is adhered fluid-tight to the sealing cap 21 around the electrode terminal 23. The adhering method may be based on heat sealing other than using an adhesive. A pressure-regulating valve 27 is attached to the aperture 21a.

A metal that may be used for the sealing cap 21 is aluminum, aluminum alloy, nickel, nickel alloy, iron, SUS, and the like. Among these, aluminum or aluminum alloy is preferred when considering favorable moldability and easy welding.

The material used when insert molding the gaskets 25 may be either thermosetting resin or thermoplastic resin as long as it is made from an insulating resin composition. The thermosetting resin may be phenol resin, melamine resin, epoxy resin, hardening silicone resin, diallyl phthalate resin, unsaturated polyester resin, polyaminobismaleimide, polybismaleimide-triazine, or the like. Moreover, the thermoplastic resin may be polypropylene, polymethlypentene, polyvinylchloride, polyvinylidene chloride, polyamide, polymethylmethacrylate, polybutylene terephthalate, polyethlene terephthalate, polycarbonate, polyphenylene sulfide, polysulfone, polyethersulfone, polyetherimide, polyether ketone, polyether ether ketone, ethylene/alpha-olefin copolymer, acrylonitrile-butadiene-styrene resin (ABS), acrylonitrile-styrene resin, or the like. Among these resins, polyphenylene sulfide, polyetherimide, or polyether ether ketone is preferred when considering favorable moldability, heat resistance, and chemical resistance.

Note that a method other than insert molding the above-given gaskets 25 when connecting the electrode terminals 23 and 24 to the sealing cap 21 may be employed. Such a method may be a method of standing a rib on the periphery of the through-holes of the sealing cap 21 along the length of the through-holes and then crimping the gaskets 25 fixed to the electrode terminals so that the rib is not electrically conductive to the electrode terminals, or a method of providing ribs to the electrode terminals and then crimping the gaskets 25 fixed to the inside of the through-holes of the sealing cap so that the rib is not electrically conductive to the electrode terminals.

The insulating resin composition that may be used for the gaskets 25 when crimping as described above may be the aforementioned thermoplastic resin or a fluorocarbon resin such as perfluoroalkoxy alkane resin, polytetrafluoroethylene resin, tetrafluoroethylene hexafluoropropylene copolymer, or the like. Among these, perfluoroalkoxy alkane resin is preferred when considering favorable moldability, heat resistance, and chemical resistance.

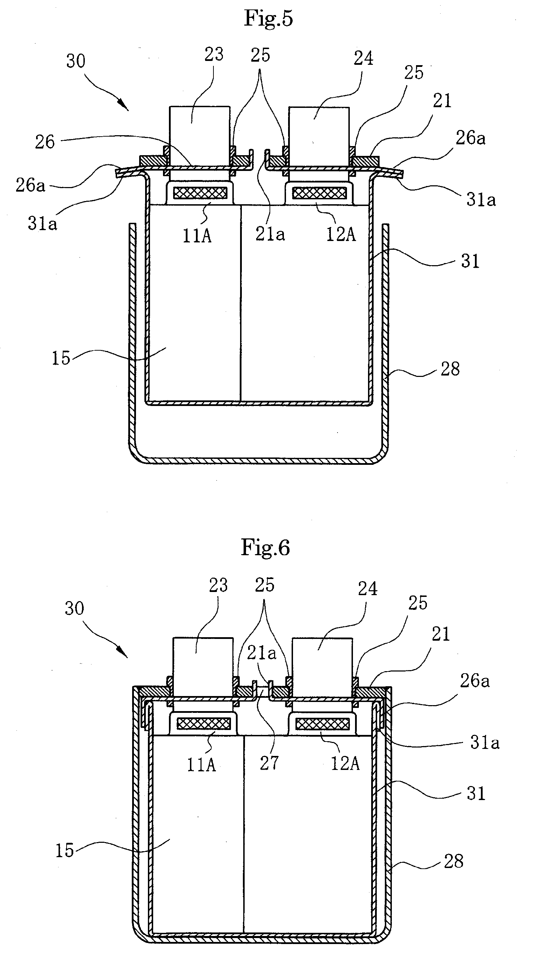

FIG. 5 is a longitudinal sectional view showing connection of the sealing cap 21 and the stack 15 contained in the pouch 31. As shown in FIG. 4, the sealing cap 21, the electrode terminals 23 and 24, and the insulating film 26 are unified into one body ahead of time as the sealing cap assembly 20. Then, the sealing cap assembly 20 is brought close to the stack 15 stored in the pouch 31, the electrode terminal 23 of the sealing cap 21 and the lead plate 11A are connected through ultrasonic welding, laser welding, or the like and the electrode terminal 24 and the lead plate 12A are connected in the same manner. At this time, projecting the lead plates 11A and 12A out from the pouch 31 by widening entrance edges 31a of the pouch 31 allows easy performance of this connection operation even if the lead plates 11A and 12A are short.

As shown in FIG. 5, once the electrode terminals 23 and 24 are connected to respective lead plates 11A and 12A, the entrance edges 31a of the pouch 31 and edge 26a of the insulating film 26 are heated, melted, and fused. As a result, the stack 15 is shielded fluid-tight and air-tight from the outside by the insulating pouch 31 and the insulating film 26.

FIG. 6 is a longitudinal sectional view of the electric double layer capacitor of the present invention. The fused parts of the entrance edges 31a of the pouch 31 and the edge 26a of the insulating film 26 are folded, the entirety is inserted in a container 28, and the perimeter of the sealing cap 21 and the metal container 28 are sealed by laser welding or the like. An electrolytic solution as an electrolytic substance is filled in the pouch 31 in a state without attaching the pressure-regulating valve 27 to the aperture 21a, impurities are removed, and the pressure-regulating valve 27 is then attached to the aperture 21a. Since the stack 15 is shielded fluid-tight and air-tight by the insulating pouch 31 and the insulating film 26, it is insulated in the container 28. This filling in of electrolytic solution, impurity removal, and valve attachment may be performed right after the aforementioned fusion of the pouch 31 and the insulating film 26.

While the electrolytic solution may be a water-based solvent, a higher voltage may be achieved using a nonaqueous solvent instead. However, with a nonaqueous solvent, incorporation of moisture must be prevented to the utmost. While the electric double layer capacitor does not rely on a chemical reaction of a material as with secondary batteries, gas may generate due to incorporated impurities, thereby increasing internal pressure of the pouch 31. If the internal pressure increases, the pouch 31 and the container 28 deform, and electrolytic solution may leak. Therefore, the pressure-regulating valve 27 is provided and is opened to release air and differential pressure when a predetermined pressure is exceeded.

While a container having a deep-drawn 0.5 mm-thick aluminum plate is used as the metal container 28 in the embodiment, it is not particularly limited to this material or processing method. However, by fabricating the metal container 28 through deep drawing, a seamless container 28 may be achieved, thereby allowing high airtightness.

Since the electric double layer capacitor of the present invention has the above-given configuration, the connection operation of the lead plates 11A and 12A to the electrode terminals 23 and 24 is easy. Due to the operation being easy, the lengths of the lead plates 11A and 12A and the electrode terminals 23 and 24 may be shortened, and the length of the electrode part may be shortened to reduce loss due to electrical resistance. Moreover, since the electrode terminals 23 and 24 are fixed to the sealing cap 21 by the gaskets 25, an insulated structure may be secured.

## Claims

1. An electric double layer capacitor, comprising:
a stack including a stacked plurality of thin positive electrode plates, plurality of thin negative electrode plates facing the thin positive electrode plates, and thin platy insulating members, each inserted between each electrode plate;
an insulating pouch having an aperture on one end for storing the stack;
a positive lead plate in which lead terminals of the positive electrode plates are collected;
a negative lead plate in which lead terminals of the negative electrode plates are collected;
a container storing the pouch in which the stack is stored;
a sealing cap sealing an opening of the container;
electrode terminals passing through the sealing cap and fixed in a fluid-tight and air-tight state; and
an insulating film attached to a side opposing the container of the sealing cap, wherein
the electrode terminals and the lead plates are conductively connected, the insulating film is adhered to the flexible pouch in a fluid-tight and air-tight state, the pouch is stored in the container, and the opening of the container is sealed with the sealing cap.

2. The electric double layer capacitor of Claim 1, wherein both the sealing cap and the container are made of metal, and the sealing cap is welded to the opening of the container so as to seal.

3. The electric double layer capacitor of either Claim 1 or 2, wherein the flexible container and the insulating film are made of a material that can be heat sealed.

4. The electric double layer capacitor of any one of Claims 1 through 3, wherein electrode terminals are passed through the sealing cap and fixed by insulating gaskets, and the gaskets and the insulating film are adhered in a fluid-tight and air-tight state.
